# EUROPEAN PATENT SPECIFICATION

(11) **EP 4 169 583 B1**
(45) Date of publication and mention of the grant of the patent: **28.01.2026**
(21) Application number: 21825209.6
(22) Date of filing: 25.05.2021
(51) Int. Cl.: A41D 13/11, A41D 31/02

(54) **EAR PART MATERIAL FOR MASK, MASK, METHOD FOR PRODUCING EAR PART MATERIAL FOR MASK, AND METHOD FOR PRODUCING MASK**
OHRTEILMATERIAL FÜR MASKE, MASKE, VERFAHREN ZUR HERSTELLUNG EINES OHRTEILMATERIALS FÜR MASKE UND VERFAHREN ZUR HERSTELLUNG EINER MASKE
MATÉRIAU DE PARTIE D'OREILLE POUR MASQUE, MASQUE, PROCÉDÉ DE PRODUCTION DE MATÉRIAU DE PARTIE D'OREILLE POUR MASQUE, ET PROCÉDÉ DE PRODUCTION DE MASQUE

(30) Priority: 19.06.2020 JP 2020106226
(43) Date of publication of application: 26.04.2023
(73) Proprietor: DAIO PAPER CORPORATION, Shikokuchuo-shi Ehime 799-0492 (JP)
(72) Inventor: HONJO, Ryota, Shikokuchuo-shi, Ehime 799-0113 (JP); ONIZAWA, Rina, Shikokuchuo-shi, Ehime 799-0113 (JP); HAYASHI, Akifumi, Shikokuchuo-shi, Ehime 799-0113 (JP)
(74) Representative: Epping - Hermann - Fischer
(86) International application number: PCT/JP2021/019752
(87) International publication number: WO 2021/256187

(56) References cited:
- CN-A- 101 537 237
- JP-A- 2001 245 998
- JP-A- 2006 034 408
- JP-A- 2006 034 408
- JP-A- 2007 021 029
- JP-A- 2007 021 029
- JP-A- 2010 194 287
- JP-A- 2019 131 928
- JP-A- 2019 183 343

## Description

### TECHNICAL FIELD

The present invention relates to an ear material for a mask, a mask, a method for manufacturing an ear material for a mask, and a method for manufacturing a mask.

### BACKGROUND OF THE INVENTION

A known configuration of a mask to be worn on the face includes: a mask body that at least partially covers the face of a wearer; and ear materials, constituting a pair, each being coupled to the mask body, i.e., a pair of members that can be hung on the ears of the wearer in order to hold the mask body at a wearing position.

Conventionally, the ear materials (ear hook portions) used for a mask are often in the form of a string. In recent years, however, sheet-shaped ear materials have been studied to reduce the load on the ears. For example, the mask disclosed in PTL 1 includes a single sheet-shaped ear hook sheet extending on the same plane with both ear hook portions connected to each other at the connection portion. The ear hook portions disclosed in PTL 1 is constituted of a sheet-shaped nonwoven fabric.

### RELATED-ART DOCUMENT

### Patent Literature

PTL 1: Japanese Unexamined Patent Publication No. 5762803
JP 2007 021029 A relates to a mask that covers a target portion of a face such as a mouthpiece or a nostril. JP 2007 021029 A discloses the preamble of claim 1.
JP 2001 245998 A relates to a mask, and more particularly, to a mask suitable for use as a disposable mask in hospitals, food factories, dusty work sites, and the like.
CN 101 537 237 A relates to a kind of mouth mask and manufacture method thereof, particularly relate to a kind of mouth mask and manufacture method thereof with elastic non-woven cloth ear band.
JP 2010 194287 A relates to a mask having a wavy formation around the mask, which is provided to improve the function and effect of the original mask.

### SUMMARY OF THE INVENTION

### Problems to be Solved by the Invention

However, depending on the size of the face of the wearer and the way of wearing, the ear hook portions disclosed in PTL 1 may be excessively stretched and greatly deformed. In this case, the structure of the ear hook portions cannot be maintained, and there is a possibility that the features and functions inherent in the ear hook portions are lost. For example, when the ear hook portions are made of a nonwoven fabric, there is a possibility that softness or the like which is a general characteristic of the nonwoven fabric may be reduced.

In view of the above, it is an object of one aspect of the present invention to provide a stretchable ear material for a mask which can maintain its original characteristics even if it is deformed when the mask is worn.

### Means for Solving the Problem

An aspect of the present invention is an ear material for a mask that includes a stretchable member including a first surface and a second surface on a side opposite to the first surface, a first surface material coupled to the first surface, and a second surface material coupled to the second surface, wherein, in a state before start of use, the stretchable member has a natural length, and the first surface material and the second surface material are contracted in a predetermined direction. The first surface material and the second surface material respectively include wrinkles that rise from the first surface and second surface of the stretchable member.

The invention is set out in the appended set of claims.

### Effects of the Invention

According to an aspect of the present invention, a stretchable ear material for a mask which can maintain its original characteristics even if it is deformed when the mask is worn can be provided.

### BRIEF DESCRIPTION OF THE DRAWINGS

FIG. 1 is a plan view of a mask according to an embodiment of the present invention as seen from the outside.
FIG. 2 is a plan view of the mask illustrated in FIG. 1 as seen from the inside (face side).
FIG. 3 is a view for explaining an example of use of the mask illustrated in FIG. 1.
FIG. 4 is a cross-sectional view taken along line I-I of FIG. 3.
FIG. 5 is a drawing for explaining an example of a method for using the mask according to the embodiment of the present invention, and is a plan view after ear hook portions, constituting a pair, are opened sideways.
FIG. 6 is a cross-sectional view taken along line II-II of FIG. 5.
FIG. 7 is a cross-sectional view taken along line V-V of FIG. 1.
FIG. 8 is an enlarged plan view and cross-sectional view of a portion where an auxiliary material is provided, in a state before start of use of the mask.
FIG. 9 is an enlarged plan view and cross-sectional view corresponding to FIG. 8, in a state after the ear materials are opened sideways.
FIG. 10 is a schematic diagram of a manufacturing apparatus of ear materials for masks and a manufacturing apparatus of masks according to an embodiment of the present invention.
FIG. 11 is a diagram for explaining manufacturing of masks by the apparatuses as illustrated in FIG. 10.

### DETAILED DESCRIPTION OF THE INVENTION

Hereinafter, embodiments of the present invention are described in detail with reference to the drawings. In each of the drawings, unless otherwise explained, the same or corresponding components may be denoted with the same reference numerals and the description thereof may be omitted. The drawings are schematic for helping understanding of the invention.

An aspect of the present invention relates to an ear material for a mask. Another aspect of the present invention relates to a mask including such an ear material for the mask. Hereinafter, first, a basic configuration of a mask according to the present aspect is explained.

### (Basic Configuration of Mask)

A mask according to the present embodiment may be a mask capable of covering the face of a wearer, more specifically, covering at least the nose and the mouth of a wearer. The mask according to this embodiment can have a function of preventing foreign matter from reaching the face and preventing droplets generated by the wearer from being scattered, and is also referred to as a sanitary mask or surgical mask. The mask may be disposable or reusable by washing.

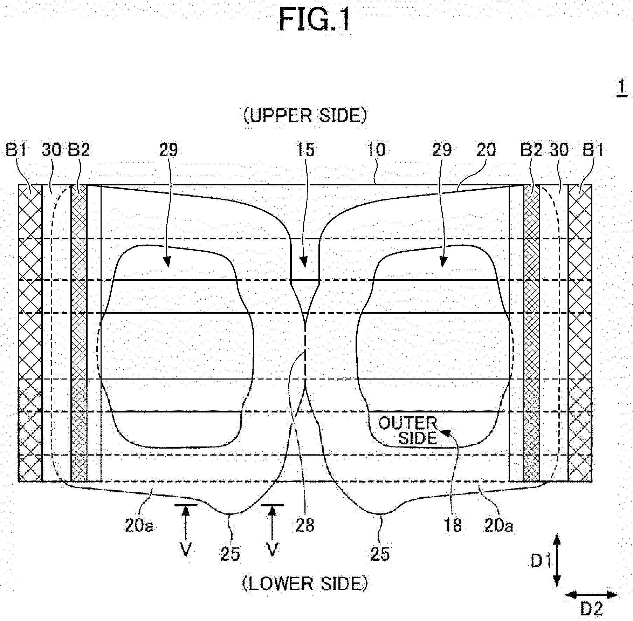

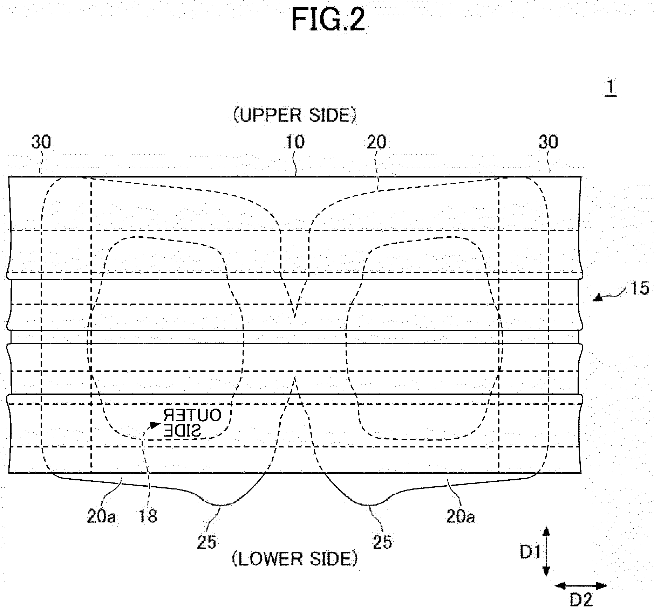

FIG. 1 is a plan view of a mask 1. FIG. 1 is a view of the mask 1 as seen from the outside, i.e., from the side exposed to the outside and facing away from the face when the mask 1 is worn. FIG. 2 is a plan view of the mask as seen from the inside (face side).

As illustrated in FIG. 1, the mask 1 according to the present embodiment includes: a mask body 10 which is disposed in front of the face of the wearer when the mask is worn and can mainly cover the nose and mouth of the wearer; and ear materials 20a, 20a, constituting the pair, coupled to the mask body 10. The mask body 10 has a vertical direction D1 corresponding to the height direction of the wearer's face when wearing the mask and a horizontal direction D2 orthogonal to the vertical direction D1. In the form of FIG. 1, the mask body 10 has a rectangular shape in a plan view having long sides in the horizontal direction D2, but the shape of the mask body 10 in a plan view is not limited to the shape as illustrated in the drawings.

As illustrated in FIGs. 1 and 2, the mask body 10 has a pleated structure 15 formed by multiple pleats arranged side by side in the vertical direction D1. The pleats of the pleated structure 15 are formed by folding a sheet constituting the body 10 at fold lines along the horizontal direction D2. In a state in which multiple pleats are formed, the side portions (the ends in the horizontal direction D2) of the mask body 10 are joined and fixed. Therefore, when the mask 1 is used, the pleats of the pleated structure 15 are extended in the vertical direction D1, so that the center in the horizontal direction D2 is curved so as to protrude toward the outer surface side of the mask 1, and can be deformed into a shape adapted to the three-dimensional shape of the face. The specific configuration of the pleated structure 15 is not particularly limited and may be a conventional configuration formed in a mask body.

As illustrated in FIGs. 1 and 2, the ear materials 20a, 20a, constituting the pair, are disposed on the outer surface side of the body 10. As illustrated in FIG. 1, each ear member 20a may be in an annular shape (or in a closed belt shape), or may have a shape that includes an annulus in a plan view. When being worn, the ear materials 20a can be hung on the ears by allowing the ears of the wearer to enter the inside of the ring of each ear material 20a, i.e., an opening 29 at the center of each ear material 20a.

The ear materials 20a, 20a, constituting the pair, may be configured as a single flat ear material sheet 20 separably coupled to each other at the center in the horizontal direction D2. The term "flat" herein refers to a shape in which the length and width of the member as a whole are larger than the thickness, and which extends or can extend in a single plane. The ear materials 20a, 20a, constituting the pair, are composed of the flat ear material sheet 20, and therefore, when the ear material 20a is hung on the ear when the mask is worn, the ear material can be brought into surface contact with the back surface of the earlobe, so that the load on the ear can be reduced, and discomfort and pain can be reduced.

The type of coupling at a separable coupling portion 28 between the ear materials 20a, 20a constituting the pair is not particularly limited, but is preferably separable by pulling with a usual force of the user. For example, it may be formed as perforations as illustrated in FIG. 1. The coupling portion 28 may also be formed by reducing the thickness of the sheet or by other means to weaken the border between the ear materials 20a, 20a constituting the pair or to increase stress.

The mask body 10 may have a multilayer structure formed by laminating multiple layers. For example, the structure may include at least three layers sandwiched between an outer layer and an inner layer of an intermediate layer having an enhanced function of collecting a foreign matter (dust, pollen, bacteria, viruses, and the like). Each layer constituting the body 10 preferably includes a fiber-containing layer such as a nonwoven fabric, a woven fabric, a knitted fabric, and the like, and more preferably includes a nonwoven fabric. Examples of the nonwoven fabric include a spunbond nonwoven fabric, a spunlace nonwoven fabric, a meltblown nonwoven fabric, an air through nonwoven fabric, a point bond nonwoven fabric, and the like. A meltblown nonwoven fabric which can contain fine fibers is preferably used for the intermediate layer. The fibers constituting the fiber-containing layer are preferably resin fibers, and the resin types of the resin fibers include polyethylene, polypropylene, polyethylene terephthalate, nylon, and the like. The basis weight of the outer and inner layers may be 10 to 50 g/m², preferably 15 to 50 g/m². The basis weight of the intermediate layer having a high foreign matter collecting property is preferably 10 to 100 g/m² and more preferably 15 to 50 g/m².

The ear materials 20a, 20a, constituting the pair, are coupled to respective side portions (end portions in the horizontal direction D2) of the outer surface of the body 10. Specifically, the ear materials 20a, 20a, constituting the pair, are coupled to both side portions of the body 10 via auxiliary materials 30, 30 (the auxiliary materials are explained later in detail). Specifically, the outer portions of the ear materials 20a, 20a, constituting the pair, in the horizontal direction D2 are coupled to the body 10, and the other portions are not coupled to the body 10. When the mask 1 according to the present embodiment starts to be used, before the mask 1 is worn, the user releases the separable coupling between the ear materials 20a, 20a constituting the pair to separate the ear materials 20a, 20a from each other (also referred to as separation operation), and open sideways the portions of the ear materials 20a, 20a which are not coupled to the body 10 in the horizontal direction D2 (also referred to as an expansion operation). Such separation and expansion operations, and the configuration related to such operation are hereinafter explained in detail.

### (Separation and expansion operation of ear material)

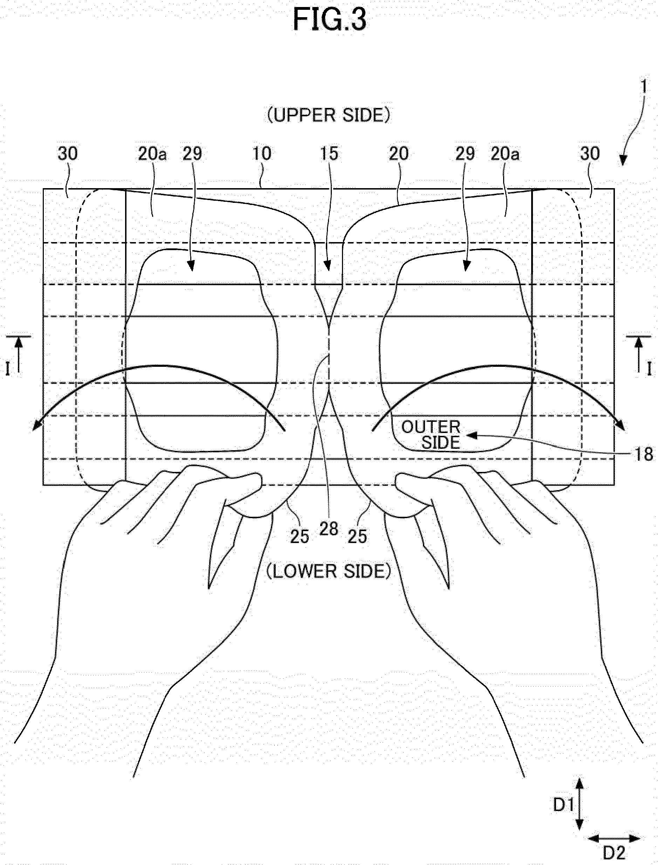

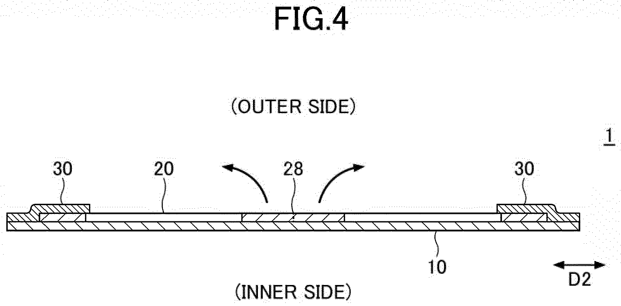

FIG. 3 illustrates a state in which the mask 1 illustrated in FIG. 1 is about to be used. FIG. 4 is a cross-sectional view taken along line I-I of FIG. 3. At the start of use, the user can pull the ear materials 20a, 20a constituting the pair in the opposite directions by pinching or holding them with their respective hands as illustrated in FIG. 3. As a result, the separable coupling portion 28 can be first uncoupled. If the coupling portion 28 includes perforations formed along the border line between the ear materials 20a, 20a constituting the pair, the perforations can be broken to separate the ear materials 20a, 20a along the border line. Thereafter, the user can open the ear materials 20a, 20a constituting the pair outward in the horizontal direction D2 toward the sides indicated by the arrows in FIGs. 3 and 4 while holding the ear materials 20a, 20a, constituting the pair.

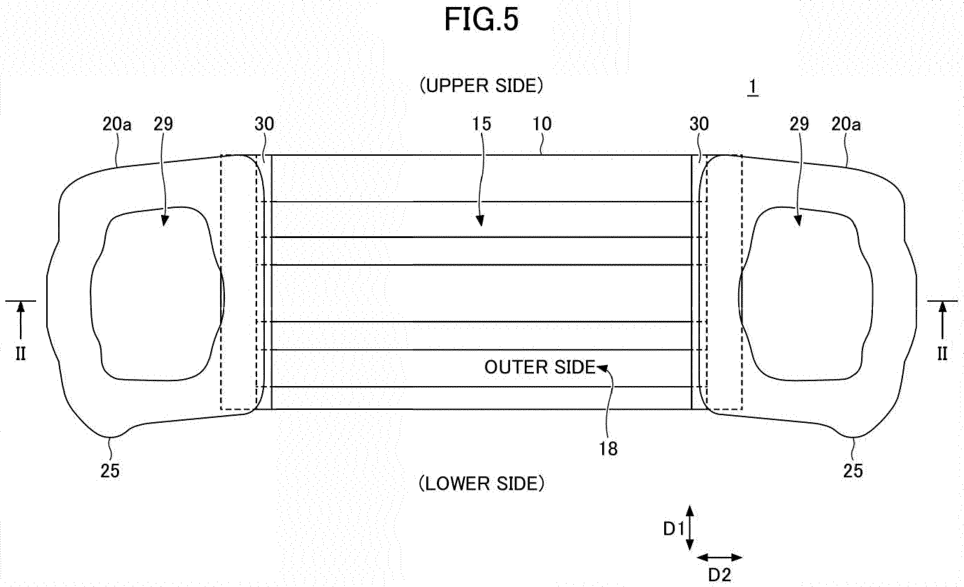

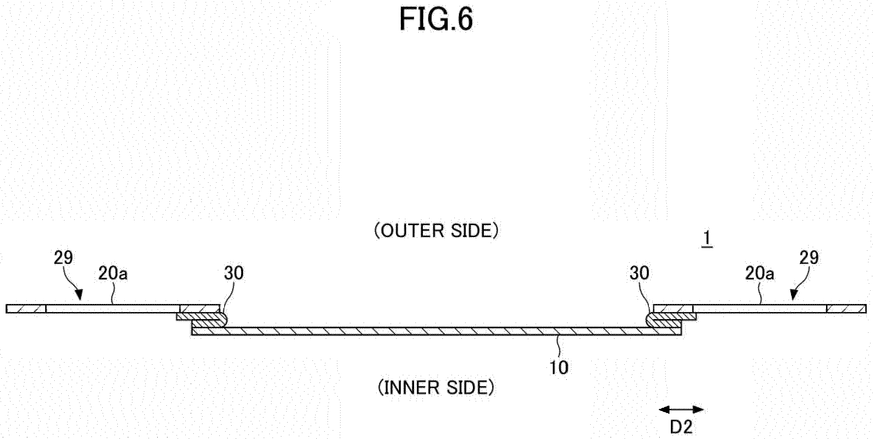

FIG. 5 illustrates a state in which the ear materials 20a, 20a constituting the pair are opened outward in the horizontal direction D2 from the state illustrated in FIG. 3. FIG. 6 is a cross-sectional view taken along line II-II of FIG. 5. As illustrated in FIGs. 5 and 6, when the ear materials 20a, 20a constituting the pair are opened, the ear materials 20a, 20a are turned over, i.e., the surface of the ear materials 20a, 20a constituting the pair facing the body 10 in the state before start of use is exposed.

As illustrated in FIG. 3, when the user opens, outward in the horizontal direction D2, the tab portions 25, 25 of the ear materials 20a, 20a, respectively, constituting the pair as described above by holding the tab portions 25, 25 and then lifting the mask 1, for example, the outer surface of the mask 1 faces the user opening the ear materials 20a, 20a, and the inner surface of the mask 1 (surface on face side) faces the side away from the user. Therefore, the mask 1 according to the present embodiment is suitable for being worn by another wearer. For example, while the mask 1 is placed with the outside of the mask 1 facing upward (with the outer surface of the body 10 facing upward), the user opens the ear materials 20a, 20a, constituting the pair, outwardly in the horizontal direction D2 by holding them with hands. Thereafter, the mask 1 is moved to the face of another wearer while the ear materials 20a, 20a constituting the pair are held, and the mask body 10 is arranged at a desired position of the wearer's face, and at this occasion, the ear materials 20a, 20a constituting the pair can be hung on the ears of the wearer while the way of holding the mask 1 is not changed. Therefore, the mask 1 according to the present embodiment can be suitably used when the mask is worn by a person who has difficulty wearing the mask by himself or herself, such as a child or a sick person.

Furthermore, since the ear materials 20a, 20a constituting the pair are disposed on the outer surface of the body 10 as described above, the possibility of the user's hand touching the inside of the mask 1 can be reduced or eliminated when the ear materials 20a, 20a constituting the pair are separated from each other and opened outward in the horizontal direction D2. Therefore, the expansion operation of the ear materials 20a, 20a in the preparation stage before the mask 1 is worn can be performed hygienically.

Furthermore, as illustrated in FIG. 3, the ear materials 20a, 20a constituting the pair may have tab portions 25, 25 which the user can pinch when the ear materials 20a, 20a constituting the pair are separated from each other and opened outward in the horizontal direction D2. The tab portions 25, 25 preferably project from the edge of the body 10 in a plan view, preferably from the lower end of the mask 1 (or the lower end of the mask body 10). Since the tab portions 25, 25 protrude from the edge of the body 10, the user can pinch the tab portions 25, 25 with both hands without touching the body 10 itself, i.e., without touching the outer surface or the inner surface of the body 10. The user can separate and expand the ear materials 20a, 20a constituting the pair without touching the body 10 or without appreciably touching the body 10. Therefore, even in a situation where the user cannot give sufficient consideration to hand hygiene, the mask 1 in a good hygiene condition can be worn by the user or by another person. Furthermore, it is preferable that the tab portions 25, 25 protrude from the lower end (end portion on the lower side in FIG. 3) of the body 10 in a plan view, because the separation and expansion operation of the ear material can be performed naturally. The maximum length in the vertical direction D1 of the portion of the tab portion 25 protruding from the lower end of the body 10 is preferably 5 to 20 mm, more preferably 8 to 15 mm.

Since the ear material 20a have the tab portions 25, 25, the user can easily adjust the ear materials by holding the tab portions 25 and 25 when or after the ear materials 20a are hung on the ears of the wearer. Specifically, the positions of the ear materials 20a can be adjusted by shifting the ear materials in the circumferential direction of the ear materials 20a relative to the ears with the tab portions 25, 25, or the tension of the ear materials 20a can be adjusted by pulling the ear materials 20a toward the rear side and loosening it.

While the mask 1 is worn, i.e., while the ear materials 20a, 20a are opened sideways and hung on the ears, the ear materials 20a, 20a are pulled toward the ears of the wearer, and accordingly, connection portions of the ear materials 20a, 20a with the body 10 are pressed toward the face of the wearer. In the present embodiment, the ear materials 20a, 20a constituting the pair are connected to both sides of the outer surface of the body 10 (FIGs. 3 and 4). Therefore, while the mask 1 is worn, the ear materials 20a are partially disposed on the outer sides of both sides of the body 10 (FIGs. 5 and 6), i.e., both sides of the body 10 are disposed between the ear materials 20a and the face of the wearer, so that both sides of the body 10 are pressed against the face by the ear materials 20a. Thereby, the gap between the body 10 and the face can be reduced at both sides of the mask body 10, and the function of the mask, for example, the function of blocking a foreign matter, the function of preventing droplets generated by the wearer from being scattered, and the like, can be improved. In addition, the ear materials 20a are not arranged on the inner sides of both side portions (face side) of the body, and the ear materials 20a do not come into contact with the face of the wearer at both side portions of the body 10 while being worn, so that discomfort can be reduced.

A mark 18 that allows the outer and inner surfaces of the body 10 to be distinguished from each other may be formed on the outer surface and/or the inner surface of the body 10 by embossing, printing, sewing, or the like. The form of the mark 18 is not limited as long as it can be visually recognized by the user. As illustrated in FIG. 1, the mark 18 may be letters, numbers, a symbol, a figure, a logo, or the like.

### (Ear material and ear material sheet)

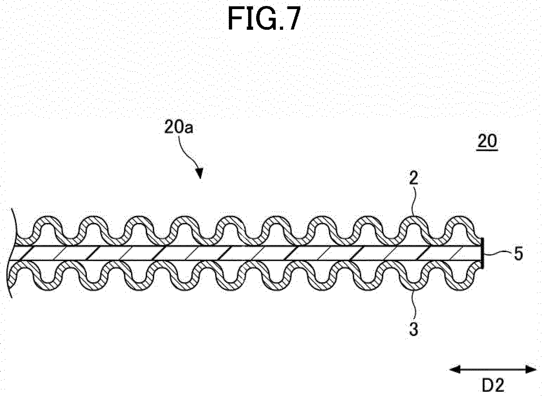

The ear material 20a or the ear material sheet 20 according to the invention has stretchability or elasticity. FIG. 7 illustrates a cross-sectional view taken along line V-V in FIG. 1, i.e., a partially enlarged cross-sectional view of the ear material sheet 20. As illustrated in FIG. 7, the ear material sheet 20 (or the ear material 20a) is a laminated sheet formed by laminating multiple layers.

According to the invention, in FIG. 7, the ear material 20a includes a stretchable film (stretchable member) 5, with a first surface material 2 being disposed on a first surface, which is one surface of the stretchable film 5, and a second surface material 3 being disposed on a second surface, which is a surface on the opposite side to the first surface. In this example, the first surface material and the second surface material are made of the same material.

The stretchability of the ear material 20a is mainly caused by the stretchable film (stretchable member) provided on the ear material 20a. The stretchable member can be stretched in at least one direction by applying a tensile force, and has a property of returning to an original length (natural length) by releasing the applied tensile force (i.e., not applying an external force). Furthermore, in the case of the stretchable film 5, i.e., in the form of a film which is a flat molded body having a substantially uniform thickness, it can have a particularly high stretchability or extensibility as compared with a fiber structure (a sheet- body formed by aggregating fibers) or the like, so that it can be widely adapted to various face sizes of wears. Furthermore, sufficient stress can be generated in the stretchable member, and therefore, the mask body 10 can be effectively brought into close contact with the face.

Examples of materials of the stretchable film 5 include polyolefin such as polyethylene and polypropylene, polyurethane, and the like. With respect to the stretchability of the stretchable film 5, it is preferable that the maximum extension rate is 3.5 to 4.0 times the natural length, as measured by a tensile testing machine. The stretchable film 5 may have a function of allowing moisture to pass through.

According to the invention, in FIG. 7, the stretchable film 5 is used as a stretchable member. In embodiments which are not part of the present invention, in place of the stretchable film, the ear material 20a may include a thread-like stretchable body aggregate formed by arranging side by side multiple thread-like stretchable bodies (or thread-like elastic bodies) such as yarn rubber, or may include a stretchable hot-melt adhesive. The stretchable hot melt adhesive may be arranged in a linear shape or in a planar shape. However, the stretchable member in the form of a film is preferable in that it is easy to handle during manufacture.

The first surface material 2 and the second surface material 3 of the ear material 20a may be the same or different. The first surface material 2 and the second surface material 3 preferably have a fiber structure. Examples of the fiber structures include a nonwoven fabric, a woven fabric, a knitted fabric, and the like. Among them, a nonwoven fabric is preferably used because of its good touch and breathability, and it contributes to the fit. Examples of nonwoven fabric include an air-through nonwoven fabric, a spunbond nonwoven fabric, a spunlace nonwoven fabric, a needle punch nonwoven fabric, a chemical bond nonwoven fabric, and the like. Among them, a spunbond nonwoven fabric having no pilling and high strength, an air-through nonwoven fabric having softness, and the like can be suitably selected. The fibers contained in the nonwoven fabric are preferably resin fibers, and the resin types of the resin fibers include polyethylene, polypropylene, polyethylene terephthalate, nylon, and the like. In a case where the first surface material 2 or the second surface material 3 is nonwoven fabric, the basis weight of the nonwoven fabric may be 5 to 50 g/m², and more particularly, preferably 8 to 25 g/m².

In many cases, the stretchable member such as the stretchable film 5 is more likely to cause irritation or discomfort when directly touching the wearer's face (skin) as compared with the non-stretchable member. Therefore, it is preferable to configure the ear material 20a so as to avoid direct contact of the stretchable member with the wearer's skin as much as possible. In contrast, in the ear material 20a according to the present embodiment, the stretchable film 5 is covered with the first surface material 2 and the second surface material 3 (FIG. 7), and therefore, direct contact between the stretchable film 5 and the skin can be avoided when the mask is worn, and the fit can be improved.

Furthermore, in the present invention, in a state where no external force is applied to the ear material, the stretchable film 5 has a natural length, i.e., is not stretched. In contrast, as illustrated in FIG. 7, the first surface material 2 and the second surface material 3 are contracted in the horizontal direction D2. In this case, the contraction of the surface material in a predetermined direction means a state in which the length of the surface material is reduced in the predetermined direction due to formation of multiple small wrinkles or folds. Multiple wrinkles along the vertical direction D1 are formed on the first surface material 2 and the second surface material 3 in the present embodiment.

In the initial state, the first surface material 2 and the second surface material 3 are contracted in the horizontal direction D2, and therefore, even if the ear material 20a is greatly extended in the horizontal direction D2, the ear material has at most a natural length or a length slightly longer than the natural length. Therefore, it is possible to prevent the first surface material 2 and the second surface material 3 from being excessively extended, thereby changing or destroying their structures. Therefore, the original characteristics and functions of the first surface material 2 and the second surface material 3 can be maintained. For example, in the case where the first surface material 2 and the second are formed of a nonwoven fabric as described above, the structure of the nonwoven fabric is not destroyed even if the nonwoven fabric is greatly stretched, and excellent flexibility, touch, and the like inherent in the nonwoven fabric can be maintained.

The outline of the ear material 20a having a shape including a ring (having the opening 29) may have a wavy shape or an uneven shape. The wavy shape may be provided on at least one of the inner outline and the outer outline of the ring, but is preferably provided on at least the inner outline. The wavy shape does not have to be provided on the entirety of the outline of the ring of the ear material 20a, and for example, the wavy shape is preferably formed in a portion where the ear material 20a is disposed to be in contact with the rear of the ear when the mask 1 is worn, i.e., in a portion situated around the center of the mask 1 in the horizontal direction D2 in a state before start of use. The wavy shape is provided on the inner outline of the portion of the ear material 20a that is in contact with the ear when being worn, and therefore, the protruding portion included in the wavy shape is easily moved independently, so that the ear material 20a is easily fitted to the shape of the ear, and the ear material 20a can be stably disposed behind the ear when the mask 1 is worn. Furthermore, in a case where the ear material 20a is extended when the mask is worn, the material of the protruding portion included in the wavy shape is also extended, thereby contributing to an increase in the length in the circumferential direction. Therefore, the length of the ear material when the ear material is extended can be secured without changing the overall size of the ear material.

### (Auxiliary materials)

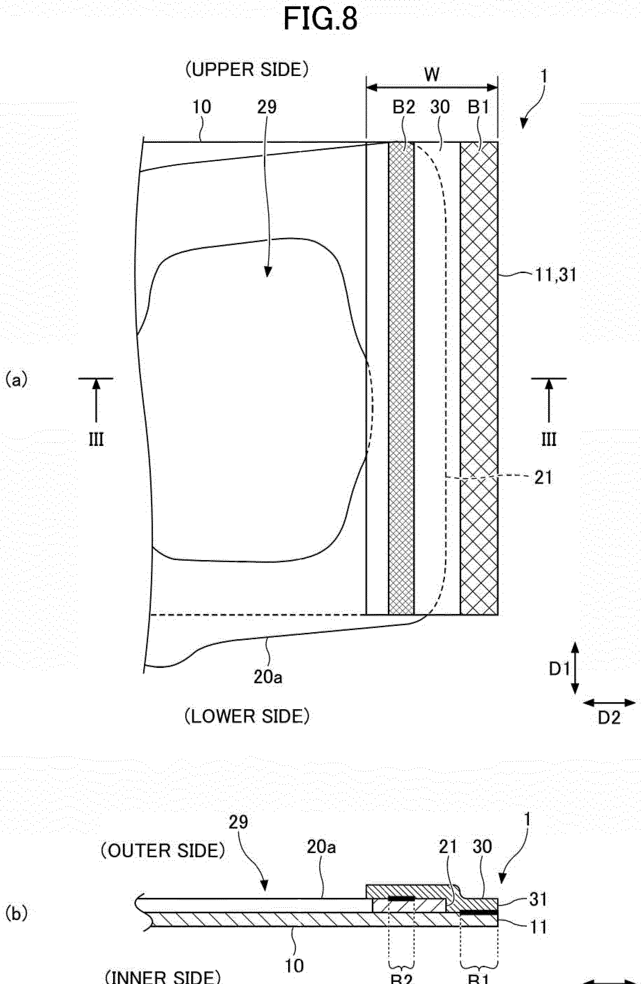

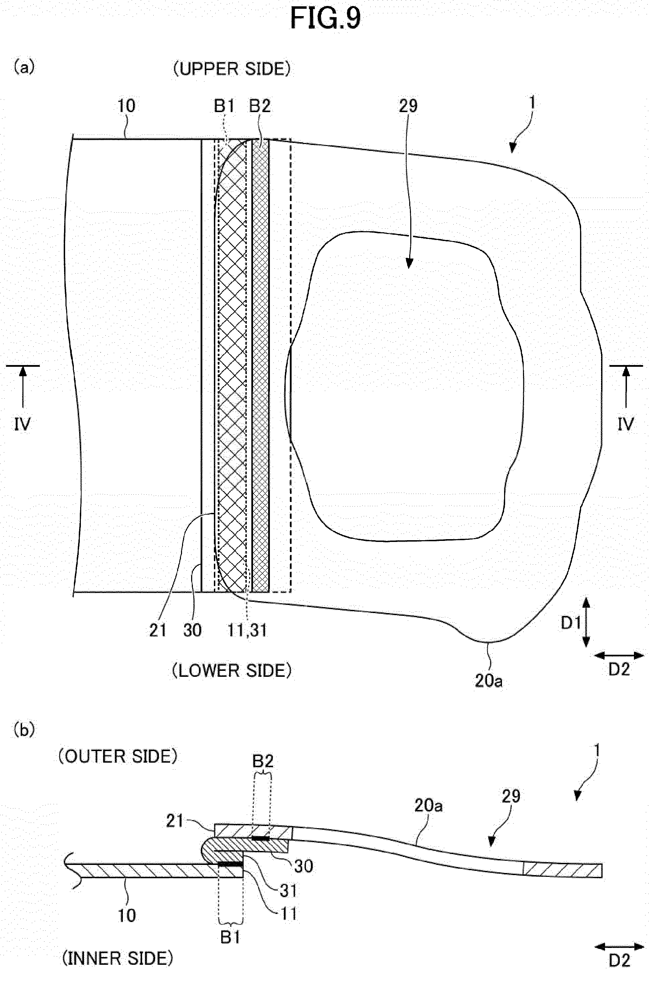

In the present embodiment, as described above, the ear materials 20a, 20a constituting the pair are coupled to both sides of the body 10 via the auxiliary materials 30, 30, respectively. The configuration and the function of the auxiliary materials 30, 30 are hereinafter explained in detail. FIG. 8 is an enlarged view of a portion of the mask 1 where the auxiliary material 30 is provided. FIG. 8 (a) is a partial plan view, and FIG. 8 (b) is a cross-sectional view taken along line III-III of FIG. 8 (a). FIG. 9 illustrates a view after the ear material 20a is opened outward in the horizontal direction D2 from the state illustrated in FIG. 8. FIG. 9 (a) is a partial plan view, and FIG. 9 (b) is a cross-sectional view taken along line IV-IV of FIG. 9 (a). In the examples of FIGs. 8 and 9, the body 10, the ear material 20a, and the auxiliary material 30 are stacked in this order.

The auxiliary materials 30 are interposed between the body 10 and the ear materials 20a so that the body 10 and the ear materials 20a are directly coupled. Specifically, the body 10 and the auxiliary material 30 are coupled at a first coupling portion B1, and the ear material 20a and the auxiliary material 30 are coupled at a second coupling portion B2, so that the body 10 and the ear material 20a are not directly joined. For example, the first coupling portion B1 and the second coupling portion B2 can be formed by means of coupling the opposing surfaces of the members by applying pressure and/or heat, such as heat sealing, ultrasonic sealing, non-heating embossing, and the like. Among them, it is preferable to use heat sealing because reliable bonding is possible.

As described above, the body 10 has a function of blocking the entry of a foreign matter and preventing droplets generated by the wearer from being scattered, while the ear materials 20a are made of a stretchable member that has a function of holding the body 10 by being hung on the ears of the wearer when the wearer wears the ear materials 20a. Therefore, in the conventional structure in which the body 10 and the ear materials 20a are directly coupled, when a force is applied to the mask 1 by pulling the ear materials 20a and the like, the body 10 cannot follow the stretch of the ear materials 20a, and the coupling cannot be maintained, and there is a possibility that both are detached from each other.

In contrast, according the present embodiment, the first coupling portion B1, which is the coupling portion between the body 10 and the auxiliary material 30, and the second coupling portion B2, which is the coupling portion between the ear material 20a and the auxiliary material 30, can be formed separately. Specifically, the respective coupling portions can be formed in a form suitable for the characteristics of the two members to be directly coupled. Furthermore, for example, as the material of the auxiliary material 30, a material capable of optimizing both of the coupling to the body 10 and the coupling to the ear material 20a can be selected. Thus, the indirect coupling between the body 10 and the ear materials 20a is less likely to be broken, and as a result, the mask that is less likely to break even when a force is applied can be obtained.

The auxiliary materials 30 may be made of a non-stretchable material or a material with a low stretchability, and is preferably made of a material having certain stretchability. The auxiliary materials 30 may be made of a material of which the shape can be irreversibly deformed when a force is applied. The auxiliary materials 30 may include a stretchable nonwoven. In this case, the auxiliary material 30 preferably has a stretchability at least in the horizontal direction D2. The stretchability of the auxiliary material 30 is preferably smaller than that of the ear material 20.

The basis weight of the auxiliary material 30 may be 5 to 100 g/m². The thickness of the auxiliary material 30 may be 100 to 1,000 µm.

As illustrated in FIGs. 8 and 9, the auxiliary material 30 may be a sheet-shaped member extending along the vertical direction D1 of the mask 1. The length of the auxiliary material 30 in the vertical direction D1 is preferably the same as the length of the mask 1 in the vertical direction D1 (the length of the body 10 in the vertical direction D1), but may be shorter than the length of the mask 1 in the vertical direction D1. Furthermore, on one side (on either the right or left side) of the mask 1 in the horizontal direction D2, an outer end 31 of the auxiliary material 30 in the horizontal direction D2 may be, in the horizontal direction D2, inside or outside an outer end 11 of the body 10 in the horizontal direction D2, but is preferably aligned with the outer end 11 of the body 10 in the horizontal direction D2 as illustrated in FIG. 8 (a) and (b).

The length (width) W of the auxiliary material 30 in the horizontal direction D2 is preferably 15 to 35 mm, depending on the size and configuration of the entire mask 1 and the sizes, shapes, and materials of the body 10 and the ear materials 20a. When the length in the horizontal direction D2 is within the above range, the areas of the first coupling portion B1 and the second coupling portion B2 can be sufficiently secured, while the auxiliary materials 30 do not interfere with the separation/expansion operation and/or the process of putting on the mask 1 at the start of use, and do not interfere with the functions of the body 10 and the ear materials 20a.

As illustrated in FIG. 8, the auxiliary materials 30 are disposed on the outer surface side of the body 10. Therefore, even when the mask 1 is worn, the auxiliary materials 30 are unlikely to come into contact with the face of the wearer, and a good fit achieved by the mask 1 according to the present embodiment is not hindered.

Furthermore, as described above, the ear material 20a according to the present embodiment may function to press both sides of the body 10 toward the face of the wearer, while the auxiliary material 30 stacked on the outer surface side of the body 10 may also function to press, integrally with the ear material 20a, the body 10 toward the face at least partially. Thus, the gap between the face and both sides of the body 10 can be further reduced, and the function of the mask 1 can be improved.

In the present embodiment, the length in the horizontal direction D2 of the ear material sheet 20 constituting the pair of ear materials 20a, 20a may be smaller than the length of the mask 1 in the horizontal direction D2. As a result, the outer end 21 of the ear material 20a in the horizontal direction D2 and the outer end 11 of the body 10 in the horizontal direction D2 can be shifted, so that the auxiliary material 30 can be pasted to a position in proximity to the end portion of the body 10 in the horizontal direction D2 that is not covered with the ear material 20a. The length of the ear material sheet 20 in the horizontal direction D2 can be 70 to 95% with respect to the length of the mask 1 in the horizontal direction D2.

In addition, by using the auxiliary material 30 for coupling the ear material 20a to the mask body 10, it is possible to avoid using a portion of the ear material 20a for adhesion to the mask body 10. Therefore, the entirety of the ear material 20a can be moved freely from the mask body 10, and the degree of freedom in the form of attachment is increased (FIG. 9). When the length of the mask body 10 in the horizontal direction D2 is to be increased or when the auxiliary material 30 is not used, the length of the ear material 20a in the horizontal direction D2 is required to be increased in accordance with the size of the mask body 10. However, this is not necessary in the present embodiment using the auxiliary material 30. The length of one ear material 20a in the horizontal direction D2 may be 60 to 90 mm, preferably 65 to 85 mm.

### (Production of ear material and mask)

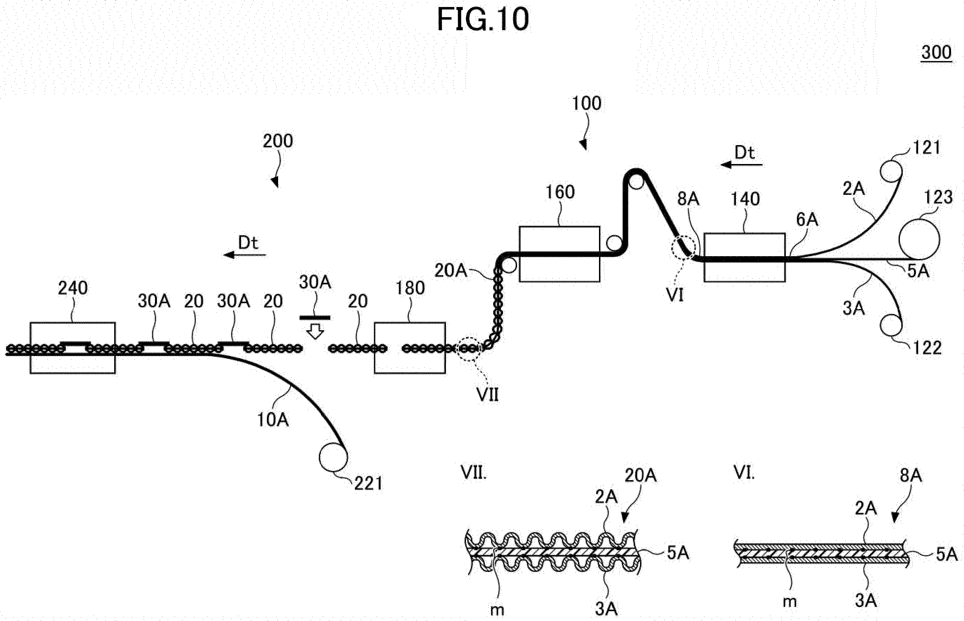

Another aspect of the present invention relates to a method of manufacturing the ear material 20a or the ear material sheet 20. FIG. 10 is a schematic view of a manufacturing apparatus 300 of masks. The manufacturing apparatus 300 of the masks is provided with a manufacturing apparatus 100 of ear materials on the upstream thereof. A mask member combining apparatus 200 for combining the manufactured ear material for the mask with other members of the mask is provided subsequently to the manufacturing apparatus 100 of the ear materials.

The manufacturing apparatus 100 of the ear materials is provided with a stretchable film band supply means 123 for supplying a stretchable film band (stretchable member band) 5A for forming a stretchable film 5, a first surface material band supply means 121 for supplying a first surface material band 2A for forming a first surface material 2, and a second surface material band supply means 122 for supplying a second surface material band 3A for forming a second surface material 3. A stretchable film band 5A, a first surface material band 2A, and a second surface material band 3A are supplied from each supply means, and then the first surface material band 2A and the second surface material band 3A are placed on one surface (first surface) and the other surface (second surface) of the stretchable film band 5A, respectively, to form a multilayer structure 6A. The multilayer structure 6A is conveyed in a conveying direction Dt.

In this case, the stretchable film band 5A is conveyed in a state of being extended in the conveying direction Dt, i.e., in a state of applying a tensile force (tension) in the conveying direction Dt. The degree of stretching of the stretchable film band 5A is controlled by the feeding speed of the stretchable film band supply means 123 and conveying means (not illustrated). The stretchable film band 5A is preferably stretched to, for example, about 1.5 to 4.0 times, preferably about 2.0 to 3.0 times, of the natural length. In contrast, the first surface material band 2A and the second surface material band 3A are conveyed in a state having a natural length (a state in which they are not pulled). Therefore, at the stage where the first surface material band 2A and the second surface material band 3A are laid on the stretchable film band 5A (at the stage before welding means 140), the surfaces of the first surface material band 2A and the second surface material band 3A laid on the respective surfaces of the stretchable film band 5A are in a state without wrinkles.

Subsequently, the multilayer structure 6A is fed to the welding means 140, so that discontinuous coupling portions : welded portions, are formed over the entire multilayer structure 6A between the stretchable film band 5A and the first surface material band 2A and between the stretchable film band 5A and the second surface material band 3A. The welding means 140 is preferably an ultrasonic welding unit, but other means such as thermal welding may be used. According to the invention, multiple discontinuous welded portions are formed in a form of dots in a plan view. The stacked body 8A is obtained by coupling the layers of the multilayer structure 6A with the welding means 140.

FIG. 10 also illustrates an enlarged cross-sectional view of the portion VI. Multiple welded portions m are intermittently formed between the stretchable film band 5A and the first surface material band 2A, and between the stretchable film band 5A and the second surface material band 3A. A reference diameter of a welded portion m in a plan view may be 0.2 to 1.0 mm. The area of the welded portion m in a plan view may be 1.8 to 19.1% of the sheet area.

Furthermore, the stacked body 8A is fed to relaxing means 160. In the relaxing means 160, the tension applied to the stretchable film band 5A in the conveying direction Dt is loosened. According to the invention, the tension is loosened until the stretchable film band 5A returns to its natural length. When the stretchable film band 5A is loosened (the length of the stretchable film band 5A is shortened), the stretchable film band 5A is contracted. In this case, the stretchable film band 5A and the first surface material band 2A are coupled by the welded portions m, and the stretchable film band 5A and the second surface material band 3A are also coupled by the welded portions m. Therefore, the first surface material band 2A and the second surface material band 3A are contracted together with the stretchable film band 5A, i.e., their lengths are reduced. However, the portions which are not coupled to the stretchable film band 5A by the welding portions m are loosened because these portions do not follow the stretchable film band 5A, and therefore these portions rise from the surface. Therefore, the first surface material band 2A and the second surface material band 3A are formed with a large number of small wrinkles extending along a direction orthogonal to the conveying direction Dt. When the wrinkles are formed, the first surface material band 2A and the second surface material band 3A have no or almost no force to return to the original length. Therefore, the stretchable film 5 is maintained in its natural length.

FIG. 10 illustrates an enlarged cross-sectional view of the portion VII. As illustrated in the drawing, in the ear material sheet band 20A, the stretchable film band 5A is flat, but the first surface material band 2A and the second surface material band 3A are contracted to form wrinkles. In the ear material sheet band 20A, continuous irregularities are formed along the conveying direction Dt as seen in a cross section obtained by cutting the first surface material band 2A and the second surface material band 3A along the conveying direction Dt.

Subsequently, the ear material sheet band 20A is fed to punching means 180. In the punching means 180, the ear material sheet band 20A is punched by a punching die so as to obtain the shape of each ear material sheet 20. In any case, multiple ear material sheets 20, 20, and ... can be obtained by the punching means 180.

In this manner, the method for producing the ear material sheet 20 includes: while the stretchable film band 5A including a first surface and a second surface on a side opposite to the first surface is stretched in the predetermined direction (the conveying direction Dt), placing the first surface material band 2A and the second surface material 3A on the first surface and the second surface, respectively; coupling the stretchable film band 5A with the first surface material band 2A and the second surface material band 3A to obtain the stacked body 8A; causing the stacked body 8A to contract in the predetermined direction (the conveying direction Dt); and cutting the stacked body 8A to form multiple ear material sheets 20 constituting a pair of ear materials separably coupled to each other.

In an embodiment which is not according to the invention : in place of the stretchable film band 5A, a long material of a thread-like stretchable body aggregate formed by arranging side by side multiple thread-like stretchable bodies (thread rubber, and the like) may be used. In this case, as described above, multiple thread-like stretchable body aggregates can be supplied while they are stretched and tensioned in the conveying direction Dt, and the first surface material band 2A and the second surface material band 3A can be laid on the respective surfaces of the assembly. Thereafter, in the welding means 140, the thread-like stretchable body and the first surface material band 2A may be welded together and the thread-like stretchable body and the second surface material band 3A may be welded together, or the first surface material band 2A and the second surface material band 3A may be welded together so as to sandwich the thread-like stretchable body.

The ear material sheets 20, 20, ... are fed to the mask member combining apparatus 200. In the mask member combining apparatus 200, an auxiliary material band 30A is provided on one surface of the ear material sheet 20. The mask member combining apparatus 200 includes a mask body band supply means 221 for supplying a mask body band 10A for forming a mask body. The mask body band supply means 221 supplies the mask body band 10A to a surface of the ear material sheet 20 that is opposite to the surface where the auxiliary material band 30A is provided. In the example illustrated in FIG. 10, the auxiliary material band 30A is provided on the outermost side, but may be provided between the ear material sheet 20 and the mask body band 10A.

After the ear material sheet 20, the auxiliary material band 30A, and the mask body band 10A are combined, the first coupling portion B1 and the second coupling portion B2 (FIGs. 8 and 9 and the like) described above are formed, and are coupled at predetermined positions by heat sealing or the like by a coupling and cutting unit 240. Subsequently to the coupling or at the same time as the coupling, cutting is performed. Thus, each of the masks 1 can be obtained.

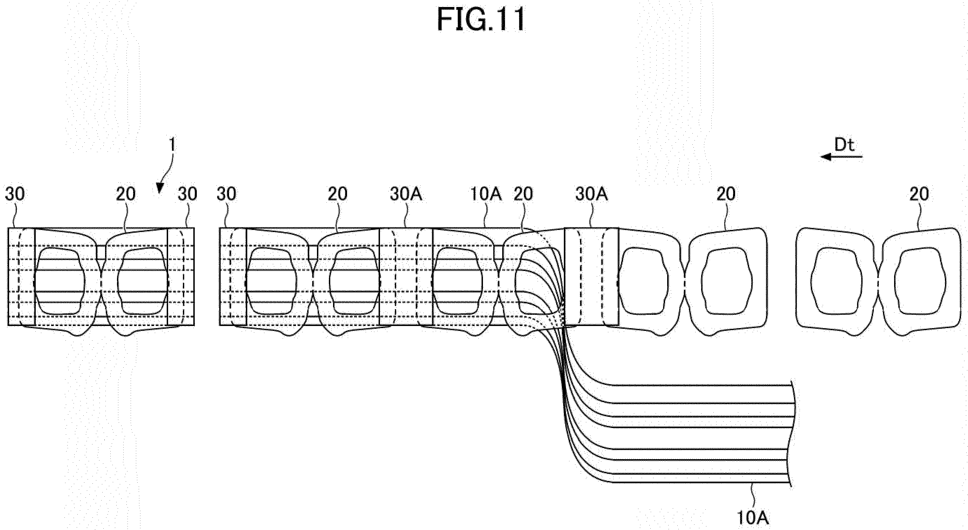

FIG. 11 schematically illustrates a process by which members are combined in the mask member combining apparatus 200. Specifically, a method for manufacturing a mask includes: (a) forming the ear material sheet 20; (b) bonding the auxiliary material band 30A with side portions of two spaced-apart ear materials sheets 20, 20; (c) bonding the auxiliary material band 30A with an outer surface of the mask body band 10A; and (d) cutting the auxiliary material band 30A and the mask body band 10A to form the mask 1.

Hereinafter, specific aspects of the present invention are supplementarily explained below.

### (Supplementary Note 1)

An aspect according to Supplementary Note 1 is an ear material for a mask, including: a stretchable member including a first surface and a second surface on a side opposite to the first surface; a first surface material coupled to the first surface; and second surface material coupled to the second surface, wherein, in a state before start of use, the stretchable member has a natural length, and the first surface material and the second surface material are contracted in a predetermined direction.

According to the above-described aspect according to the Supplementary Note 1, the ear material for the mask includes a stretchable member and surface materials bonded to the respective surfaces. The stretchable member is a member having relatively high stretchability, and therefore, the ear material widely adapted to various face sizes of wears can be provided. Furthermore, due to the stretchability of the stretchable member, the mask body can be effectively brought into close contact with the face.

Furthermore, in the ear material according to this aspect, the first surface material and the second surface material are provided on the respective surfaces of the stretchable member, i.e., the stretchable member is covered with the first surface material and the second surface material, and therefore, the stretchable member does not come into direct contact with the face. The stretchable member is more likely to cause irritation or discomfort as compared with the non-stretchable member. However, according to this aspect, by appropriately selecting the material of the surface material, a contact with the stretchable member can be avoided, and the fit when the mask is worn can be improved.

Furthermore, according to this aspect, the stretchable member has a natural length, i.e., is not extended, and therefore, sufficient extension is possible when the mask is worn. In contrast, the first surface material and the second surface material are contracted in the state before start of use. In this case, "surface material being contracted" means a state in which the surface material is shorter (contracted) than the original length (natural length) by applying pleats (wrinkles or looseness) to the original length. Therefore, the first surface material and the second surface material remain in a state having a natural length or a length slightly longer than the natural length, even if they are greatly stretched with the stretch of the stretchable member. Therefore, even if the first surface material and the second surface material are excessively stretched, the structures of the first surface material and the second surface material are prevented from changing, and features such as tactile feeling inherent in the first surface material and the second surface material can be maintained.

### (Supplementary Note 2)

According to the invention and to the Supplementary Note 2, the stretchable member is a stretchable film.

According to the above-described aspect according to the Supplementary Note 2, by forming the stretchable member in the form of a film, the ear material can be more easily manufactured.

### (Supplementary Note 3)

In an aspect according to the Supplementary Note 3, the first surface material and second surface material are made of nonwoven fabric.

According to the above-described aspect according to the Supplementary Note 3, the first surface material and the second surface material which can directly contact the skin is made of a nonwoven fabric, so that softness can be imparted to the surface of the ear material and the fit of the ear material can be improved. This good fit can be maintained even if the ear material is excessively extended as described above.

### (Supplementary Note 4)

In an aspect according to the Supplementary Note 4, an outline of the ear material has a wavy shape.

According to the above-described aspect according to the Supplementary Note 4, the protruding portion included in the wavy shape of the outline is easily moved independently, so that the ear material is easily deformed flexibly and easily fitted to the shape of the ear. Furthermore, when the ear material is stretched when the mask is worn, the material of the protruding portion included in the wavy shape is stretched, thereby contributing to an increase in the length in the circumferential direction. Therefore, the length of the ear material when the ear material is stretched can be secured without changing the overall size of the ear material.

### (Supplementary Note 5)

An aspect according to Supplementary Note 5 is a mask that includes: a mask body; an ear material sheet made of ear materials each of which is the ear material for the mask according to the invention; auxiliary materials provided on an outer surface of the ear material sheet, wherein the ear materials are coupled to side portions of the mask body via the auxiliary materials. Specifically, the mask includes: a mask body; a stretchable member including a first surface and a second surface on a side opposite to the first surface; a first surface material coupled to the first surface; and a second surface material coupled to the second surface, wherein, in a state before start of use, the stretchable member has a natural length, and the first surface material and the second surface material are contracted in a predetermined direction.

According to the above-described aspect according to the Supplementary Note 5, the mask having the ear material sheet which exhibits substantially the same effects as those described with regard to the above-described aspect of the Supplementary Note 1 can be provided. Furthermore, the stretchable member of the ear material sheet according to this aspect has a natural length, and contraction stress is not generated or hardly generated in the ear material sheet. Therefore, the contraction stress of the ear material sheet that affects the auxiliary material directly coupled to the ear material sheet and the mask body indirectly coupled to the ear material sheet can be reduced. Specifically, the auxiliary material and the mask body can be prevented from contracting according to the contraction of the ear material sheet and from impairing their functions.

Furthermore, according to this aspect, the ear material is coupled to the mask body via the auxiliary material, and therefore, it is possible to avoid using a portion of the ear material for adhesion to the mask body. Therefore, the entirety of the ear material can be moved freely from the mask body when the mask is worn, and the degree of freedom in the form of attachment is increased. Furthermore, the coupling portion between the ear material mask body and the auxiliary material and the coupling portion between the ear material and the auxiliary material can be formed separately in an appropriate coupling form. Thus, a bond which is not easily broken can be formed indirectly between the ear material and the mask body without impairing the function and the fit of the member, and the robust mask can be obtained.

### (Supplementary Note 6)

An aspect according to the Supplementary Note 6 is a method for manufacturing an ear material for a mask, the method including: while a stretchable member including a first surface and a second surface on a side opposite to the first surface is stretched in a predetermined direction, placing a first surface material and a second surface material on the first surface and the second surface, respectively; coupling the stretchable member with the first surface material and the second surface material to obtain a stacked body; causing the stacked body to contract in the predetermined direction; and cutting the stacked body into a predetermined shape to form ear materials.

According to the above-described aspect according to the Supplementary Note 6, the method for manufacturing the ear material for the mask which exhibits substantially the same effects as those described with regard to the above-described aspect of the Supplementary Note 1 can be provided.

### (Supplementary Note 7)

As aspect according to Supplementary Note 7 includes: (a)while a stretchable member including a first surface and a second surface on a side opposite to the first surface is stretched in a predetermined direction, placing a first surface material and a second surface material on the first surface and the second surface, respectively, coupling the stretchable member with the first surface material and the second surface material to obtain a stacked body, causing the stacked body to contract in the predetermined direction, and cutting the stacked body into a predetermined shape to form a plurality of ear material sheets constituting a pair of ear materials separably coupled to each other; (b) bonding an auxiliary material band with side portions of two spaced-apart ear materials sheets of the plurality of ear material sheets; (c) bonding the auxiliary material band with an outer surface of a mask body band; (d) cutting the auxiliary material band and the mask body band to form the mask.

According to the above-described aspect according to the Supplementary Note 7, the method for manufacturing the mask which exhibits substantially the same effects as those described with regard to the above-described aspect of the Supplementary Note 5 can be provided.

### DESCRIPTION OF THE REFERENCE NUMERALS

- 1: mask
- 2: first surface material
- 2A: first surface material band
- 3: second surface material
- 3A: second surface material band
- 5: stretchable film (stretchable member )
- 5A: stretchable film band (stretchable member band )
- 6A: multilayer structure
- 8A: stacked body
- 10: mask body
- 10A: mask body band
- 15: pleats
- 20: ear material sheet
- 20a: ear material
- 20A: ear material sheet band
- 28: separable coupling portion
- 29: opening
- 30: auxiliary material
- 30A: auxiliary material band
- 100: manufacturing apparatus of ear materials
- 121: first surface material band supply means
- 122: second surface material band supply means
- 123: stretchable film band supply means
- 140: welding means
- 160: relaxing means
- 180: punching means
- 200: mask member combining apparatus
- 221: mask body band supply means
- 240: coupling and cutting unit
- 300: manufacturing apparatus of masks
- B1: first coupling portion
- B2: second coupling portion
- D1: vertical direction of mask
- D2: horizontal direction of mask
- Dt: conveying direction

## Claims

1. An ear material (20a) for a mask (1), comprising:
a stretchable member (5) including a first surface and a second surface on a side opposite to the first surface;
a first surface material (2) coupled to the first surface; and
a second surface material (3) coupled to the second surface,
wherein the first surface material (2) is formed by a first surface material band (2A), the second surface material (3) is formed by a second surface material band (3A), and the stretchable member (5) is formed by a stretchable film band (5A), wherein the first surface material band (2A) and the second surface material band (3A) are respectively placed on one surface and the other surface of the stretchable film band (5A) to form a multilayer structure (6A),
wherein the stretchable member (5), the first surface material (2), and the second surface material (3) are coupled in a state in which the stretchable film band (5A) is stretched in a predetermined direction, and wherein the first surface material band (2A) and the second surface material band (3A) are in a state having a natural length being a state in which they are not pulled,
the surfaces of the first surface material band (2A) and the second surface material band (3A) being laid on the respective surfaces of the stretchable film band (5A) in a state without wrinkles, at the stage before being coupled by welding means (140),
wherein, in a state before start of use, that is in a state where no external force is applied to the ear material, the stretchable member (5) has a natural length, wherein the natural length is an original unstretched length, and the first surface material (2) and the second surface material (3) are contracted in the predetermined direction, and
wherein the first surface material (2) and the second surface material (3) respectively include wrinkles extending along a direction orthogonal to the predetermined direction that rise from the first surface and second surface of the stretchable member (5),
**characterized in that**
the stretchable member (5), the first surface material (2) and second surface material (3) are coupled by discontinuous coupling portions being in a form of dots in a plan view,
wherein the discontinuous coupling portions are welded portions and are formed over the entire multilayer structure (6A) between the stretchable film band (5A) and the first surface material band (2A) and between the stretchable film band (5A) and the second surface material band (3A).

2. The ear material (20a) for the mask (1) according to claim 1, wherein the stretchable member (5) is a stretchable film.

3. The ear material (20a) for the mask (1) according to claim 1 or 2, wherein the first surface material (2) and the second surface material (3) are made of a nonwoven fabric.

4. The ear material (20a) for the mask (1) according to any one of claims 1 to 3, wherein an outline of the ear material (20a) has a wavy shape.

5. A mask (1) comprising:
a mask body (10);
an ear material sheet (20) made of ear materials (20a) each of which is the ear material (20a) for the mask (1) according to any one of claims 1 to 4; and
auxiliary materials (30) provided on an outer surface of the ear material sheet (20),
wherein the ear materials (20a) are coupled to side portions of the mask body (10) via the auxiliary materials (30).

6. A method for manufacturing an ear material (20a) for a mask (1) according to claims 1 to 4, the method comprising:
while a stretchable member (5) including a first surface and a second surface on a side opposite to the first surface is stretched in a predetermined direction, placing a first surface material (2) and a second surface material (3) on the first surface and the second surface, respectively,
coupling the stretchable member (5) with the first surface material (2) and the second surface material (3) to obtain a stacked body (8A);
causing the stacked body (8A) to contract in the predetermined direction; and
cutting the stacked body (8A) into a predetermined shape to form ear materials (20a),
wherein, in a state before start of use, that is in a state where no external force is applied to the ear material, the stretchable member (5) has a natural length, wherein the natural length is an original unstretched length, and the first surface material (2) and the second surface material (3) are contracted in the predetermined direction, and wherein the first surface material (2) and the second surface material (3) respectively include wrinkles extending along a direction orthogonal to the predetermined direction that rise from the first surface and second surface of the stretchable member (5);
wherein the first surface material (2) is formed by a first surface material band (2A), the second surface material (3) is formed by a second surface material band (3A), and the stretchable member (5) is formed by a stretchable film band (5A), wherein the first surface material band (2A) and the second surface material band (3A) are respectively placed on one surface and the other surface of the stretchable film band (5A) to form a multilayer structure (6A),
wherein the stretchable member (5), the first surface material (2), and the second surface material (3) are coupled by discontinuous coupling portions in a state in which the stretchable film band (5A) is stretched in the predetermined direction, and wherein the first surface material band (2A) and the second surface material band (3A) are in a state having a natural length being a state in which they are not pulled, the discontinuous coupling portions being in a form of dots in a plan view, wherein the discontinuous coupling portions are welded portions and are formed over the entire multilayer structure (6A) between the stretchable film band (5A) and the first surface material band (2A) and between the stretchable film band (5A) and the second surface material band (3A),
the surfaces of the first surface material band (2A) and the second surface material band (3A) being laid on the respective surfaces of the stretchable film band (5A) in a state without wrinkles, at the stage before being coupled by welding means (140).

7. A method for manufacturing a mask (1) according to claim 5, the method comprising:
(a) manufacturing an ear material (20a) for a mask (1) according to claim 6, further comprising:
cutting the stacked body (8A) into a predetermined shape to form a plurality of ear material sheets (20) constituting a pair of ear materials (20a) separably coupled to each other;
(b) bonding an auxiliary material band (30A) with side portions of two spaced-apart ear material sheets (20) of the plurality of ear material sheets (20);
(c) bonding the auxiliary material band (30A) with an outer surface of a mask body band (10A); and
(d) cutting the auxiliary material band (30A) and the mask body band (10A) to form the mask (1), such that auxiliary materials (30) are provided on an outer surface of the ear material sheets (20) and that the ear materials (20a) are coupled to side portions of a mask body (10) via the auxiliary materials (30).

## Patentansprüche

1. Ohrmaterial (20a) für eine Maske (1), umfassend:
ein dehnbares Element (5) mit einer ersten Oberfläche und einer zweiten Oberfläche auf einer der ersten Oberfläche gegenüberliegenden Seite;
ein erstes Oberflächenmaterial (2), das mit der ersten Oberfläche verbunden ist; und
ein zweites Oberflächenmaterial (3), das mit der zweiten Oberfläche verbunden ist,
wobei das erste Oberflächenmaterial (2) durch ein erstes Oberflächenmaterialband (2A) gebildet ist, das zweite Oberflächenmaterial (3) durch ein zweites Oberflächenmaterialband (3A) gebildet ist und das dehnbare Element (5) durch ein dehnbares Folienband (5A) gebildet ist, wobei das erste Oberflächenmaterialband (2A) und das zweite Oberflächenmaterialband (3A) jeweils auf einer Oberfläche und der anderen Oberfläche des dehnbaren Folienbandes (5A) angeordnet sind, um eine Mehrschichtstruktur (6A) zu bilden,
wobei das dehnbare Element (5), das erste Oberflächenmaterial (2) und das zweite Oberflächenmaterial (3) in einem Zustand miteinander verbunden sind, in dem das dehnbare Folienband (5A) in einer vorbestimmten Richtung gedehnt ist, und wobei sich das erste Oberflächenmaterialband (2A) und das zweite Oberflächenmaterialband (3A) in einem Zustand mit einer natürlichen Länge befinden, der ein Zustand ist, in dem sie nicht gezogen sind,
wobei die Oberflächen des ersten Oberflächenmaterialbands (2A) und des zweiten Oberflächenmaterialbands (3A) in einem Zustand ohne Falten auf den jeweiligen Oberflächen des dehnbaren Folienbands (5A) aufgelegt sind, bevor sie durch Schweißmittel (140) verbunden werden,
wobei in einem Zustand vor Beginn der Verwendung, d. h. in einem Zustand, in dem keine äußere Kraft auf das Ohrmaterial ausgeübt wird, das dehnbare Element (5) eine natürliche Länge aufweist, wobei die natürliche Länge eine ursprüngliche, nicht gedehnte Länge ist, und das erste Oberflächenmaterial (2) und das zweite Oberflächenmaterial (3) in der vorbestimmten Richtung zusammengezogen sind, und
wobei das erste Oberflächenmaterial (2) und das zweite Oberflächenmaterial (3) jeweils Falten aufweisen, die sich entlang einer Richtung orthogonal zur vorbestimmten Richtung erstrecken, die von der ersten Oberfläche und der zweiten Oberfläche des dehnbaren Elements (5) ausgehen,
**dadurch gekennzeichnet, dass**
das dehnbare Element (5), das erste Oberflächenmaterial (2) und das zweite Oberflächenmaterial (3) durch diskontinuierliche Verbindungsabschnitte verbunden sind, die in der Draufsicht die Form von Punkten haben,
wobei die diskontinuierlichen Verbindungsabschnitte Schweißabschnitte sind und über die gesamte Mehrschichtstruktur (6A) zwischen dem dehnbaren Folienband (5A) und dem ersten Oberflächenmaterialband (2A) sowie zwischen dem dehnbaren Folienband (5A) und dem zweiten Oberflächenmaterialband (3A) ausgebildet sind.

2. Ohrmaterial (20a) für die Maske (1) gemäß Anspruch 1, wobei das dehnbare Element (5) eine dehnbare Folie ist.

3. Ohrmaterial (20a) für die Maske (1) gemäß Anspruch 1 oder 2, wobei das erste Oberflächenmaterial (2) und das zweite Oberflächenmaterial (3) aus einem Vliesstoff gemacht sind.

4. Ohrmaterial (20a) für die Maske (1) gemäß einem der Ansprüche 1 bis 3, wobei ein Umriss des Ohrmaterials (20a) eine wellenförmige Gestalt aufweist.

5. Maske (1), umfassend:
einen Maskenkörper (10);
eine Ohrmaterialbahn (20) aus Ohrmaterialien (20a), von denen jedes das Ohrmaterial (20a) für die Maske (1) gemäß einem der Ansprüche 1 bis 4 ist; und
Hilfsmaterialien (30), die auf einer Außenfläche der Ohrmaterialbahn (20) vorgesehen sind,
wobei die Ohrmaterialien (20a) über die Hilfsmaterialien (30) mit Seitenteilen des Maskenkörpers (10) verbunden sind.

6. Verfahren zur Herstellung eines Ohrmaterials (20a) für eine Maske (1) gemäß den Ansprüchen 1 bis 4, wobei das Verfahren umfasst:
während ein dehnbares Element (5) mit einer ersten Oberfläche und einer zweiten Oberfläche auf einer der ersten Oberfläche gegenüberliegenden Seite in einer vorbestimmten Richtung gedehnt wird, Anbringen eines ersten Oberflächenmaterials (2) und eines zweiten Oberflächenmaterials (3) auf der ersten Oberfläche bzw. der zweiten Oberfläche,
Verbinden des dehnbaren Elements (5) mit dem ersten Oberflächenmaterial (2) und dem zweiten Oberflächenmaterial (3), um einen gestapelten Körper (8A) zu erhalten;
Veranlassen, dass sich der gestapelte Körper (8A) in der vorbestimmten Richtung zusammenzieht; und
Schneiden des gestapelten Körpers (8A) in eine vorbestimmte Form, um Ohrmaterialien (20a) zu bilden,
wobei in einem Zustand vor Beginn der Verwendung, d. h. in einem Zustand, in dem keine äußere Kraft auf das Ohrmaterial ausgeübt wird, das dehnbare Element (5) eine natürliche Länge aufweist, wobei die natürliche Länge eine ursprüngliche, nicht gedehnte Länge ist, und das erste Oberflächenmaterial (2) und das zweite Oberflächenmaterial (3) in der vorbestimmten Richtung zusammengezogen sind, und wobei das erste Oberflächenmaterial (2) und das zweite Oberflächenmaterial (3) jeweils Falten aufweisen, die sich entlang einer Richtung orthogonal zur vorbestimmten Richtung erstrecken, die von der ersten Oberfläche und der zweiten Oberfläche des dehnbaren Elements (5) ausgehen;
wobei das erste Oberflächenmaterial (2) durch ein erstes Oberflächenmaterialband (2A) gebildet ist, das zweite Oberflächenmaterial (3) durch ein zweites Oberflächenmaterialband (3A) gebildet ist und das dehnbare Element (5) durch ein dehnbares Folienband (5A) gebildet ist, wobei das erste Oberflächenmaterialband (2A) und das zweite Oberflächenmaterialband (3A) jeweils auf einer Oberfläche und der anderen Oberfläche des dehnbaren Folienbandes (5A) angeordnet sind, um eine Mehrschichtstruktur (6A) bilden,
wobei das dehnbare Element (5), das erste Oberflächenmaterial (2) und das zweite Oberflächenmaterial (3) durch diskontinuierliche Verbindungsabschnitte in einem Zustand verbunden sind, in dem das dehnbare Folienband (5A) in der vorbestimmten Richtung gedehnt ist, und wobei sich das erste Oberflächenmaterialband (2A) und das zweite Oberflächenmaterialband (3A) in einem Zustand mit einer natürlichen Länge befinden, der ein Zustand ist, in dem sie nicht gezogen sind, wobei die diskontinuierlichen Verbindungsabschnitte in der Draufsicht die Form von Punkten haben, wobei die diskontinuierlichen Verbindungsabschnitte Schweißabschnitte sind und über die gesamte Mehrschichtstruktur (6A) zwischen dem dehnbaren Folienband (5A) und dem ersten Oberflächenmaterialband (2A) und zwischen dem dehnbaren Folienband (5A) und dem zweiten Oberflächenmaterialband (3A) ausgebildet sind,
wobei die Oberflächen des ersten Oberflächenmaterialbandes (2A) und des zweiten Oberflächenmaterialbandes (3A) in einem Zustand ohne Falten auf den jeweiligen Oberflächen des dehnbaren Folienbandes (5A) aufgelegt werden bevor sie durch Schweißmittel (140) verbunden werden.

7. Verfahren zur Herstellung einer Maske (1) gemäß Anspruch 5, wobei das Verfahren umfasst:
(a) Herstellen eines Ohrmaterials (20a) für eine Maske (1) gemäß Anspruch 6, ferner umfassend:
Schneiden des gestapelten Körpers (8A) in eine vorbestimmte Form, um eine Vielzahl von Ohrmaterialbahnen (20) zu bilden, die ein Paar von Ohrmaterialien (20a) bilden, die trennbar miteinander verbunden sind;
(b) Verbinden eines Hilfsmaterialbands (30A) mit Seitenabschnitten von zwei voneinander beabstandeten Ohrmaterialbahnen (20) der mehreren Ohrmaterialbahnen (20);
(c) Verbinden des Hilfsmaterialbands (30A) mit einer Außenfläche eines Maskenkörperbands (10A); und
(d) Schneiden des Hilfsmaterialbandes (30A) und des Maskenkörperbandes (10A), um die Maske (1) zu bilden, so dass Hilfsmaterialien (30) auf einer Außenfläche der Ohrmaterialbahnen (20) vorgesehen sind und dass die Ohrmaterialien (20a) über die Hilfsmaterialien (30) mit Seitenabschnitten eines Maskenkörpers (10) verbunden sind.

## Revendications

1. Matériau d'oreilles (20a) pour un masque (1), comprenant :
un élément extensible (5) ayant une première surface et une deuxième surface sur un côté opposé à la première surface ;
un premier matériau de surface (2) relié à la première surface ; et
un deuxième matériau de surface (3) relié à la deuxième surface,
le premier matériau de surface (2) étant formé par une première bande de matériau de surface (2A), le deuxième matériau de surface (3) étant formé par une deuxième bande de matériau de surface (3A), et l'élément extensible (5) étant formé par une bande de film extensible (5A), la première bande de matériau de surface (2A) et la deuxième bande de matériau de surface (3A) étant disposées respectivement sur une surface et sur l'autre surface de la bande de film extensible (5A) afin de former une structure multicouche (6A),
l'élément extensible (5), le premier matériau de surface (2) et le deuxième matériau de surface (3) étant reliés les uns aux autres dans un état dans lequel la bande de film extensible (5A) est étirée dans une direction prédéterminée, et la première bande de matériau de surface (2A) et la deuxième bande de matériau de surface (3A) se trouvant dans un état de longueur naturelle qui représente un état dans lequel aucune traction n'est exercée sur elles,
les surfaces de la première bande de matériau de surface (2A) et de la deuxième bande de matériau de surface (3A) étant posées sur les surfaces respectives de la bande de film extensible (5A) dans un état sans plis, dans la phase avant d'être reliées par des dispositifs de soudage (140),
dans un état avant le début de l'utilisation, c'est-à-dire dans un état dans lequel aucune force extérieure n'est appliquée sur le matériau d'oreilles, l'élément extensible (5) a une longueur naturelle, la longueur naturelle étant une longueur initiale non étirée, et le premier matériau de surface (2) et le deuxième matériau de surface (3) étant contractés dans la direction prédéterminée, et
le premier matériau de surface (2) et le deuxième matériau de surface (3) comprenant chacun des plis s'étendant le long d'une direction orthogonale à la direction prédéterminée s'élevant depuis la première surface et la deuxième surface de l'élément extensible (5),
**caractérisé en ce que**
l'élément extensible (5), le premier matériau de surface (2) et le deuxième matériau de surface (3) sont reliés par des sections de liaison discontinues qui, vues en plan, se présentent sous la forme de points,
les sections de liaison discontinues étant des sections soudées et étant formées sur toute la structure multicouche (6A) entre la bande de film extensible (5A) et la première bande de matériau de surface (2A), ainsi qu'entre la bande de film extensible (5A) et la deuxième bande de matériau de surface (3A).

2. Le matériau d'oreilles (20a) pour un masque (1) selon la revendication 1, sachant que l'élément extensible (5) est une feuille extensible.

3. Le matériau d'oreilles (20a) pour un masque (1) selon la revendication 1 ou 2, sachant que le premier matériau de surface (2) et le deuxième matériau de surface (3) sont constitués d'un tissu de toison.

4. Le matériau d'oreilles (20a) pour un masque (1) selon l'une des revendications 1 à 3, sachant qu'un contour du matériau d'oreilles (20a) a une forme ondulée.

5. Masque (1) comprenant :
un corps de masque (10) ;
une couche de matériau d'oreilles (20) constituée de matériaux d'oreilles (20a), chacun étant le matériau d'oreilles (20a) pour un masque (1) selon l'une des revendications 1 à 4 ; et
des matériaux auxiliaires (30) prévus sur une surface extérieure de la couche de matériaux d'oreilles (20),
les matériaux d'oreilles (20a) étant reliés aux parties latérales du corps de masque (10) par l'intermédiaire des matériaux auxiliaires (30).

6. Procédé de fabrication d'un matériau d'oreilles (20a) pour un masque (1) selon les revendications 1 à 4, le procédé comprenant :
tout en étirant un élément extensible (5) ayant une première surface et une deuxième surface sur un côté opposé à la première surface dans une direction prédéterminée, disposer un premier matériau de surface (2) et un deuxième matériau de surface (3) respectivement sur la première surface et sur la deuxième surface,
lier l'élément extensible (5) au premier matériau de surface (2) et au deuxième matériau de surface (3) pour obtenir un corps empilé (8A) ;
causer le corps empilé (8A) à se contracter dans la direction prédéterminée ; et
découper le corps empilé (8A) en une forme prédéterminée afin de former des matériaux d'oreilles (20a),
sachant que, dans un état avant le début de l'utilisation, c'est-à-dire dans un état dans lequel aucune force extérieure n'est appliquée au matériau d'oreilles, l'élément extensible (5) a une longueur naturelle, la longueur naturelle étant une longueur initiale non étirée, et le premier matériau de surface (2) et le deuxième matériau de surface (3) sont contractés dans la direction prédéterminée, et sachant que le premier matériau de surface (2) et le deuxième matériau de surface (3) comprennent chacun des plis qui s'étendent le long d'une direction orthogonale à la direction prédéterminée s'élèvent depuis la première surface et la deuxième surface de l'élément extensible (5) ;
le premier matériau de surface (2) étant formé par une première bande de matériau de surface (2A), le deuxième matériau de surface (3) étant formé par une deuxième bande de matériau de surface (3A), et l'élément extensible (5) étant formé par une bande de film extensible (5A), la première bande de matériau de surface (2A) et la deuxième bande de matériau de surface (3A) étant disposées respectivement sur une surface et sur l'autre surface de la bande de film extensible (5A) afin de former une structure multicouche (6A),
l'élément extensible (5), le premier matériau de surface (2) et le deuxième matériau de surface (3) étant reliés, dans un état dans lequel la bande de film extensible (5A) est étirée dans la direction prédéterminée, par des sections de liaison discontinues, et sachant que la première bande de matériau de surface (2A) et la deuxième bande de matériau de surface (3A) sont dans un état de longueur naturelle, qui est un état dans lequel aucune traction n'est exercée sur elles, les sections de liaison discontinues se présentant sous la forme de points dans une vue en plan, les sections de liaison discontinues étant des parties soudées et s'étendant sur toute la structure multicouche (6A) entre la bande de film extensible (5A) et la première bande de matériau de surface (2A) et entre la bande de film extensible (5A) et la deuxième bande de matériau de surface (3A),
les surfaces de la première bande de matériau de surface (2A) et de la deuxième bande de matériau de surface (3A) étant posées sur les surfaces respectives de la bande de film extensible (5A) dans un état sans plis, et ce avant d'être reliées par des dispositifs de soudage (140).

7. Procédé de fabrication d'un masque (1) selon la revendication 5, le procédé comprenant :
(a) la fabrication d'un matériau d'oreilles (20a) pour un masque (1) selon la revendication 6, comprenant en outre :
la découpe du corps empilé (8A) en une forme prédéterminée afin de former une pluralité de couches de matériau d'oreilles (20) constituant une paire de matériaux d'oreilles (20a) reliés entre eux de manière séparable ;
(b) le collage d'une bande de matériau auxiliaire (30A) sur des parties latérales de deux couches de matériau d'oreilles (20) espacées l'une de l'autre parmi la pluralité de couches de matériau d'oreilles (20) ;
(c) le collage de la bande de matériau auxiliaire (30A) sur une face extérieure d'une bande de corps de masque (10A) ; et
(d) la découpe de la bande de matériau auxiliaire (30A) et la bande de corps de masque (10A) afin de former le masque (1), de telle sorte que les matériaux auxiliaires (30) soient prévus sur une surface extérieure des couches de matériau d'oreilles (20) et que les matériaux d'oreilles (20a) soient reliés aux parties latérales du corps de masque (10) par l'intermédiaire des matériaux auxiliaires (30).
